Europäisches Patentamt

European Patent Office

Office européen des brevets

(19)

(11) Publication number: **0 474 293 A1**

# EUROPEAN PATENT APPLICATION

(12)

(21) Application number: **91202196.1**

(22) Date of filing: **29.08.91**

(51) Int. Cl.⁵: **G01N 21/88**, G01B 11/02,
G01B 11/14

(30) Priority: **03.09.90 NL 9001929**

(43) Date of publication of application:
**11.03.92 Bulletin 92/11**

(84) Designated Contracting States:
**AT BE CH DE DK ES FR GB GR IT LI LU NL SE**

(71) Applicant: **VAN DER VELDEN GROEP B.V.**
**Esp 48**
**NL-5691 NJ Son(NL)**

(72) Inventor: **Jonkers, Antonius Franciscus**
**Johannus**
**Koevoortseweg 2**
**NL-5281 SC Boxtel(NL)**

(74) Representative: **Noz, Franciscus Xaverius, Ir.**
**et al**
**Algemeen Octrooibureau P.O. Box 645**
**NL-5600 AP Eindhoven(NL)**

(54) **A method and device for determining joint widths between sewer pipes of a sewage system.**

(57) A method for determining joint widths between sewer pipes of a sewage system by forming an image of an internal section of said sewage system comprising part of a joint between two sewer pipes, forming at least two light patterns with a known mutual distance on the internal section and comparing, taking into account said known mutual distance, the distances between respective projections of the light patterns and of the boundaries of the part of the joint in the image, as well as a device for implementing said method, said device comprising a sewer trolley with a camera head and a monitor coupled to said camera head, whereby the camera head is provided with a light pattern projection unit for the distance-independent projection of said light patterns at substantially constant dimensions in a certain distance range.

FIG. 1

The invention relates to a method for determining joint widths between sewer pipes of a sewage system, said method comprising forming an image of an internal section of said sewage system comprising part of a joint between two sewer pipes.

The invention furthermore relates to a device for implementing the method according to the invention.

A sewer camera inspection system comprising a sewer trolley, on which a CCD camera is mounted, is known. Besides said sewer trolley and camera this known device comprises a control for the sewer trolley as well as for the position of the camera head, a control for the camera, a signal amplifier for video signals from the camera, a title generator for mixing text relating to for example the town, the street, the branch of the sewage system and the distance of the camera head to the drainhole of the sewage system, into which the sewer trolley has been introduced, into the video signal, a video recorder for recording the mixed video signal and at least one monitor for reading information which is being recorded or which has been recorded by the video recorder. Besides other sewer inspection applications the known device may also be used for completion inspection, during which inspection it may be verified whether the joints between for example newly laid sewer pipes for a sewage system to be constructed are correctly joined, in particular whether joint widths fall within the tolerances set. With regard to the tolerances set reference is made to the table in the appendix, which belongs to and forms part of the present description.

The method mentioned in the preamble comprises the further measure of reading the image of the internal section of the sewage system comprising the part of the joint between two sewer pipes and evaluating, on the basis of said read-out, whether the joint width in question falls within the tolerances mentioned which, as appears from the appendix, depend on a number of factors, such as the material of the sewer pipes in question, the joint between said pipes and the diameter of said pipes. It will be apparent that said evaluation cannot always take place with equal accuracy.

The object of the present invention is to improve the known method in such a manner that joint widths can be determined with essentially improved accuracy and in order to accomplish that objective a method of the kind mentioned in the preamble is provided, which is characterized by forming at least two light patterns with a known mutual distance on the internal section and comparing, taking into account said known mutual distance, the distances between respective projections of the light patterns and of the boundaries of the part of the joint in the image.

As a result of the above measures joint widths can be determined more accurately, because a reference is available, namely the known mutual distance between the projected light patterns, which are projected in the image with the same display measure as the associated joint width.

Preferably the light patterns are laser beam dots, because with the parallel laser beams forming the laser beam dots the diameter of the laser beam dots is independent of the projection distance and thus of the diameter of the sewer pipe.

The projection of the joint width in the image as well as the distance between the projections of the light patterns, more in particular laser beam dots, in the image can be measured by means of a ruler. Since the actual mutual distance between the laser beam dots is known, the relation between the known mutual distance between the laser beam dots and the mutual distance between the displays thereof can be computed and be applied to the joint width projected in the image.

The joint width can also be read without a ruler by using the light patterns as an optical ruler, for which purpose the light patterns must be formed on a line extending perpendicularly to the joint boundaries and preferably one of the light patterns is first aligned with one of the joint boundaries.

If necessary and/or desired an even higher measuring accuracy can be achieved by measuring, by means of suitable equipment and software when video signals are used for generating a video image built up from picture elements, the distances between projections of the light patterns and of the joint boundaries in the image respectively. This may take place directly, by means of the video signal, or by means of interaction with the user, who can input points into the displayed video image, said points corresponding with the laser beam dots and with respective joint boundaries respectively, for example by means of a mouse.

A device for implementing the method according to the invention distinguishes itself from the known device in that the camera head is provided with a light pattern projection unit, in particular a laser unit for emitting at least two parallel leaser beams at a certain mutual distance.

The invention will be explained in more detail with reference to the drawing, in which:

Figure 1 diagrammatically shows a part of a section of a sewage system, at the location of a connection between two sewer pipes thereof;

Figure 2 shows a block diagram of the laser unit mounted on the camera head and the control device for said unit; and

Figure 3 shows the mechanical part of the laser unit for receiving the diode lasers thereof.

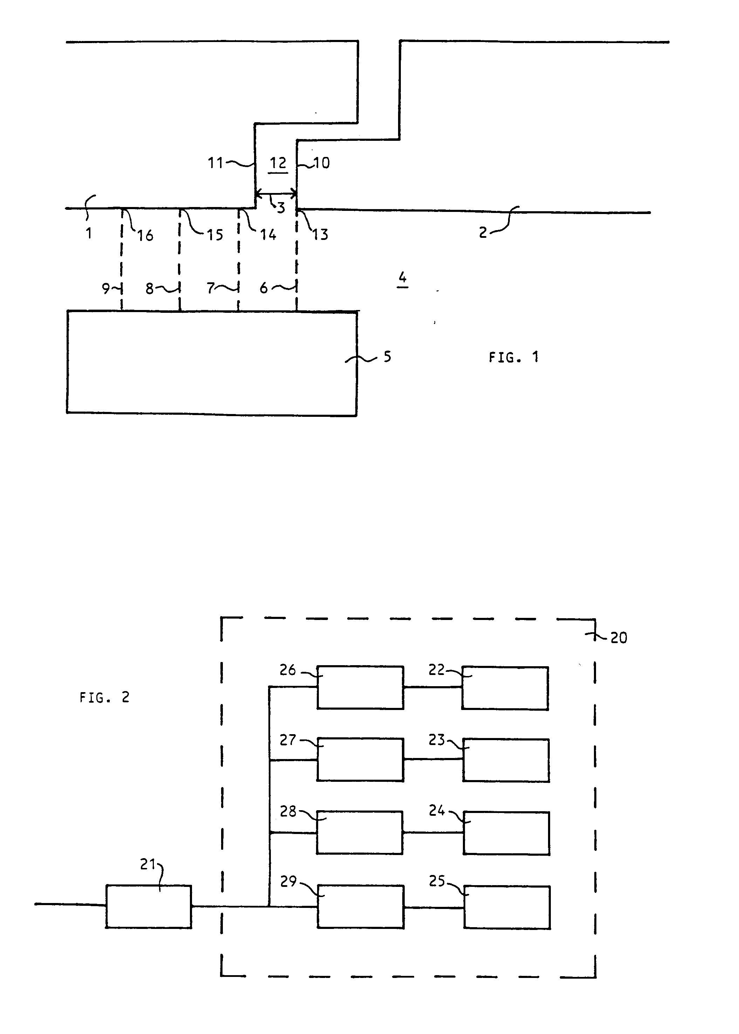

In Figure 1 reference numerals 1 and 2 respectively indicate two parts of two interconnected sewer pipes having a joint width 3. The inside of the sewage system is indicated by reference numeral 4. A laser unit is provided in the inside 4 of the sewage system (the rest of which is not shown), said laser unit being diagrammatically shown in Figure 1 and being indicated at 5 in said Figure. The laser unit 5 is mounted on a camera head (not shown) of a sewer trolley (likewise not shown) which can be introduced into the interior 4 of the sewage system, whereby the phrase "mounted on" also means that the laser unit 5 may form part of said camera head. The camera head with laser unit 5 may be controlled into position, just like the sewer trolley itself, of course. Prior to reading the control takes place in such a manner that one of the four parallel laser beams 6 - 9 emitted by the laser unit 5, which are spaced apart by fixed equal distances, for example 2 cm, is aligned with one of the boundaries 10 or 11 of the joint 12; the right-hand laser beam 6 with the right-hand boundary 10 of the joint 12 in Figure 1. An optical ruler has been laid along the joint 12 as it were, along which ruler the joint width 3 can be read, because the equal spacing between the laser beams 6 - 9 is known. Said reading takes place by means of an image which has been made of the joint 12 and the associated internal section of the sewage system. In principle this could be done by means of a photo camera or other means, but preferably it takes place, possibly using a known sewage system inspection device, by means of an image on a monitor (not shown). In principle this image is only different from the conventional image in that representations of the projected laser beam dots 13 - 16 are present therein. The actual joint width 3 can be measured even more accurately, using the video image, by means of a ruler, whereby two laser light dots with a known mutual distance can be projected anywhere on the section. In fact the factor of reduction between the actual joint width 3 and the projection thereof in the monitor image can be determined by measuring the distance between two of the laser light dots indicated at 13 - 16 in Figure 1. This determined relation will then be applied to the projection of the actual joint width 3 measured in the video image.

Although Figure 1 shows a laser unit 5 producing four laser beams 6 - 9 it will be possible, will a small admissible joint width 3 and a suitable mutual distance between the laser beams 6 - 9, to provide two laser beams, such as 6 and 7 in Figure 1.

In more general terms, with a given mutual distance between the laser beams 6 - 9 the maximum admissible joint width 3 determines the required number of laser beams 6 - 9, and the equal mutual distance between said laser beams determines the measuring accuracy.

Although so far laser beams 6 - 9 have been discussed with reference to Figure 1, it is emphasized that it is not absolutely necessary to use laser beams. Laser beams have been chosen because it is relatively easy to generate non-diverging laser beams, which is necessary when a distance-independent scale projection is required; also consider the various diameters of the sewer pipes in this context. Another optical projection device may be used, therefore, which in a certain distance range may provide a distance-independent projection, at substantially constant dimensions, of a scale division. The projected scale division must thereby be sufficiently intense so as to be registered by the camera and preferably the projected light patterns should be as small as possible. The projected light patterns do not have to be dots, however, such as 13 - 16 in Figure 1, but they may for example also be line sections.

The laser beams 6 - 9 in Figure 1 may furthermore emanate from a single laser source, whose laser beam has been split into a respective number of subbeams by means of suitable optics. An advantageous implementation, however, consists of using diode lasers, which will be further discussed below. An advantage of diode lasers is namely that they are small, as a result of which the laser unit 5 does not have to be voluminous, so that it can be placed as closely to the camera head lens as possible, thus preventing parallax. With a suitable arrangement of the camera head it is possible, by using suitable optics, to project the laser beams 6 - 9 through the camera head lens.

For safety reasons it is preferred to use visible laser beams 6 - 9. In principle it is also possible to use for example infrared diode lasers. Instead of a solid state laser it is also possible to use a gas laser, which has better optical characteristics, but which has the disadvantage of being larger.

In the above two examples have been given for determining, in accordance with the invention, joint widths between sewer pipes of a sewage system, namely by on the one hand reading, using a projected scale division or optical ruler, in contrast to prior art which does without these means, and on the other hand measuring and computing. The determination may also take place directly, however, on the basis of the video signal delivered by the video camera. For this purpose special equipment and software is required, which may be used in combination with the computer, which forms part of known sewer inspection camera devices anyway. For interpreting video signals a computer plugin circuit card with the associated software is already commercially available under the name of "sprite grabber". A first step thereby consists of reading into the computer the image with the projections of the light patters and the joint boundaries. In the image, which the computer then displays on the monitor, also an indicator is projected, which can be directed by the user, for example by means of a mouse, towards the projections of the for example two laser beam dots, thus inputting their positions as reference points. The computer then computes the number of picture points between the input reference points. Since the mutual distance between the laser beam dots is known, the computer can now establish by how many picture elements this distance is represented, or with what unit distance a picture element corresponds. The same takes place with regard to the joint boundaries as measuring points. In that case the computer establishes the number of picture points between the measuring points and finally computes, using the unit distance, the joint width in for example millimetres. By means of the table of the appendix (the so-called RIONED-table) it can now be determined whether or not the joint width is admissible.

Of course it is possible to implement the computer processing in another manner; it is only essential that distances in terms of picture elements are compared!

Figure 2 diagrammatically indicates the electronic part of a possible laser unit and the associated control device. In particular the dotted line box shown at 20 indicates the electronic part (hereafter to be called the electronic laser unit) of the laser unit 5 in Figure 1, whilst reference numeral 21 indicates the common intensity control device. The electronic laser unit 20 comprises four diode lasers 22 - 25 and individual intensity control devices, 26 - 29 respectively, by means of which mutual intensity deviations among the diode lasers 22 - 25 can be adjusted. The common intensity control device 21 is used to control the intensity in dependence on the distance between the laser unit 5 in Figure 1 and the inside wall of the sewage system, in order that on the one hand the camera does not get fixed on laser dots which are too bright, while on the other hand their intensity is sufficient so as to be registered for example by means of a CCD camera.

The laser diode used may for example be type KD 6701 G of Gerhard Franck Optronik GmbH, Hamburg, Germany, which is provided with a cylindrical metal housing with built-in collimator optics and a photo diode, or the laser diode HLP2000 or HLP3000 of Hitachi, Japan. The individual intensity control means may be the LDP201 of Power Technology Incorporated, Little Rock, Arkansas, USA.

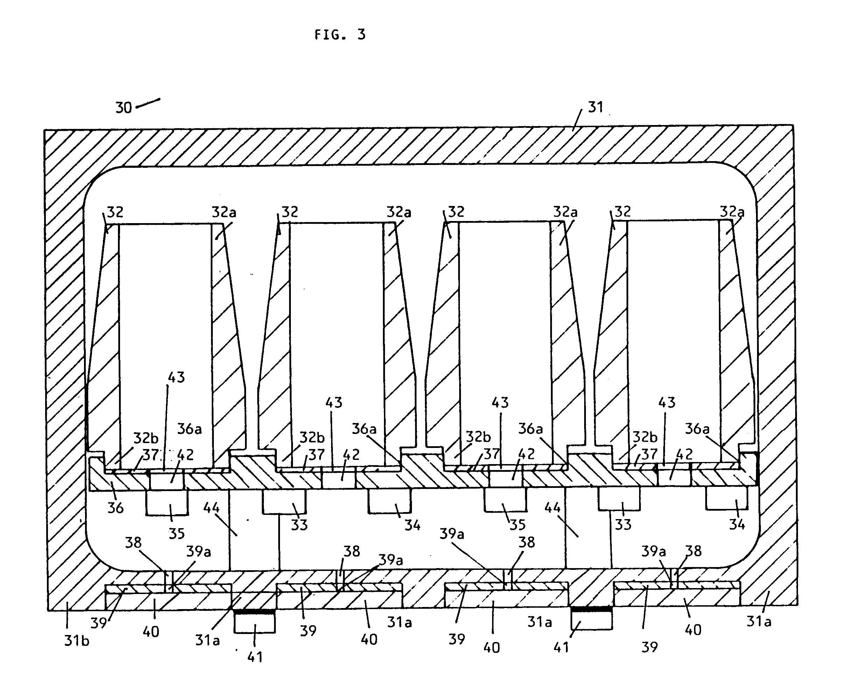

Figure 3 shows a longitudinal sectional view of a possible embodiment of the mechanical part 30 of the laser unit 5. It is provided with a housing 31, in the inside of which an adjusting plate 36 is provided. Said adjusting plate 36 contains circular recesses 36a, in which O-shaped tensioning rubbers 37 are provided as resilient spacers, on which holders 32 for accomodating the diode lasers are placed. Said holders 32 are in particular provided with a cylindrical bore 32 for accommodating with a clamping fit the metal housing of the diode lasers. Respective through bores 42 are provided in the recesses 36a of the adjusting plate 36, said through bores being axially aligned with the through central opening 43 in the tensioning rubbers 37. Thus a laser beam of a respective diode laser can be allowed to pass through the baseplate 36. For each holder 32 the baseplate 36 furthermore contains three socket screws 33 - 35, forming tensioning means which are provided so as to co-operate with that end portion 32b of the holders 32 which is accommodated in the recesses 36a in the adjusting plate, whereby the socket screws 33 - 35 are placed at a angular distance of 120 degrees with respect to each other. A plurality of small bores 38, opening into circular recesses 31a at the front side 31b of the housing 31, are provided opposite the through bores 42 in the adjusting plate 36, said through bores 38 having a diameter of for example 0.8 mm, so as to suppress a possible tendency of a respective laser beam to diverge. In the recesses 31 transparent covering glasses 40 forming sealing means are provided for the respective laser beam, for example by means of double-sided adhesive tape 39, which may have the shape of an O-ring, with of course a central through opening 39, which is axially aligned with the bore 38. The adjusting plate 36 is provided spaced from the front wall 31b of the housing 31, by means of socket screws 41 and distance tubes 44, whereby of course the bores 42 and 38 will be axially aligned. Below the functions of the rubber tensioning ring 37 and the socket screws 33 - 35 will be explained in more detail.

The socket screws 33 - 35 are adjusting screws for aligning the respective laser beam with respect to the through bore 38. The tensioning rubbers 37 thereby provide tilting points. In this way the four, in Figure 3, laser beams can be accurately adjusted parallel to each other.

TABLE

DISPLACEMENT IN MM

| MATERIAL | CONCRETE | | PVC | AC | SILICEOUS SANDSTONE |
|---|---|---|---|---|---|
| CONNECTION | socket/spigot | male/female | | | |
| CLASS | 3 - 5 | 3 - 5 | 3 - 5 | 3 - 5 | 3 - 5 |
| DIMENSION | | | | | |
| 200 | - | 10 - 20 | 20 - 50 | 30 - 60 | 20 - 50 |
| 250 | 30 - 70 | 10 - 20 | 20 - 50 | 30 - 60 | 20 - 50 |
| 300 | 30 - 70 | 10 - 20 | - | 30 - 60 | 20 - 50 |
| 315 | - | - | 30 - 60 | - | - |
| 350 | - | - | - | 30 - 60 | - |
| 400 | 30 - 70 | 10 - 20 | 30 - 70 | 40 - 80 | 20 - 50 |
| 450 | - | - | - | 40 - 80 | 20 - 50 |
| 500 | 40 - 80 | 10 - 30 | 40 - 80 | 40 - 80 | 20 - 50 |
| 600 | 40 - 80 | 10 - 30 | - | 40 - 80 | 30 - 60 |
| 630 | - | - | 40 - 90 | - | - |
| 700 | 40 - 80 | 20 - 40 | - | 40 - 90 | 30 - 60 |
| 800 | 40 - 80 | 20 - 40 | - | 50 - 110 | 30 - 60 |
| 900 | 40 - 90 | 20 - 40 | - | 50 - 110 | 30 - 70 |
| 1000 | 40 - 90 | 20 - 40 | - | 50 - 110 | 30 - 70 |
| 1100 | - | - | - | 50 - 110 | - |
| 1200 | - | - | - | 60 - 130 | - |
| 1250 | 40 - 90 | 20 - 40 | - | - | - |
| 1300 | - | - | - | 60 - 130 | - |
| 1400 | - | - | - | 60 - 130 | - |
| 1500 | 40 - 90 | 20 - 50 | - | 60 - 130 | - |
| 250/375 | - | 10 - 20 | - | - | - |
| 300/450 | - | 10 - 20 | - | - | - |
| 350/525 | - | 10 - 30 | - | - | - |
| 400/600 | - | 10 - 30 | - | - | - |
| 500/750 | - | 10 - 30 | - | - | - |
| 600/900 | - | 20 - 40 | - | - | - |
| 700/1050 | - | 20 - 40 | - | - | - |
| 800/1200 | - | 20 - 40 | - | - | - |
| 900/1350 | - | 20 - 40 | - | - | - |
| 1000/1500 | - | 20 - 40 | - | - | - |

**Claims**

1. A method for determining joint widths between sewer pipes of a sewage system, said method comprising forming an image of an internal section of said sewage system comprising part of a joint between two sewer pipes, characterized by forming at least two light patterns with a known mutual distance on the internal section and comparing, taking into account said known mutual distance, the distances between respective projections of the light patterns and of the boundaries of the part of the joint in the image.

2. A method according to claim 1, characterized in that said light patterns are formed on a line extending perpendicularly to the joint boundaries.

3. A method according to claim 1 or 2, characterized by aligning one of said light patterns with one of said joint boundaries.

4. A method according to any one of the preceding claims, characterized by using laser beam dots as light patterns.

5. A method according to any one of the preceding claims, whereby the image used is a video image built up from picture elements, characterized in that the distances are compared in terms of picture elements.

6. A device for implementing the method according to any one of the preceding claims, said device comprising a sewer trolley with a camera head and a monitor coupled to said camera head, characterized in that said camera head is provided with a light pattern projection unit for the distance-independent projection of said light patterns at substantially constant dimensions in a certain distance range.

7. A device according to claim 6, characterized in that said light pattern projection unit comprises a laser unit for emitting at least two parallel laser beams at a certain mutual distance.

8. A device according to claim 7, characterized in that said laser unit comprises a plurality of diode lasers, a sealed housing with a straight adjusting plate containing a plurality of recesses, whose number corresponds with the number of diode lasers, said recesses being provided equally spaced from each other on a line so as to accommodate a respective diode laser by means of an intermediate resilient spacer having a central through hole, which is axially aligned with a through bore in said recess, both being provided so as to pass a laser beam emitted by a respective diode laser, whereby for each holder for a respective diode laser tensioning means are provided in said adjusting plate, so as to align the respective laser beams parallel to each other and whereby the front wall of the housing, opposite which the adjusting plate is placed in parallel spaced relation in the interior of the housing, casu quo is provided with bores which are provided axially aligned with the through bores of the adjusting plate, said bores having a smaller diameter than the laser beams emitted by the diode lasers, whereby said latter bores open into recesses in the outside of the front wall of the housing, in which sealing means transmitting the respective laser beam are accommodated.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 124 268 (W.RAUSCH) <br> * claim 1 * * <br> – – – | 1,6 | G 01 N 21/88 <br> G 01 B 11/02 <br> G 01 B 11/14 |
| A | US-A-3 758 214 (D.MANGELSDORF) <br> * claims 1-10 * & NL-A-7 116 520 * <br> – – – | 1,6 | |
| A | US-A-3 769 492 (L.CULLEN) <br> * column 4, line 26 - column 5 * * <br> – – – | 1,6 | |
| A | US-A-3 578 906 (L.W.HOLM STROM) <br> – – – – – | | |

TECHNICAL FIELDS SEARCHED (Int. Cl.5)

G 01 N
G 01 B
E 03 F
H 04 N

The present search report has been drawn up for all claims

| Place of search | Date of completion of search | Examiner |
|---|---|---|
| The Hague | 13 November 91 | VAN DEN BULCKE E. |